# EUROPEAN PATENT SPECIFICATION

(11) **EP 3 348 460 B1**
(45) Date of publication and mention of the grant of the patent: **02.10.2019**
(21) Application number: 18151505.7
(22) Date of filing: 12.01.2018
(51) Int. Cl.: B62J 6/02, B60Q 1/26, F21V 21/00, F21V 29/70, F21S 43/14

(54) **VEHICLE BODY FRONT PORTION STRUCTURE FOR SADDLED VEHICLE**
VORDERTEILSTRUKTUR EINER FAHRZEUGKAROSSERIE EINES SATTELFAHRZEUGS
STRUCTURE DE PARTIE AVANT DE CARROSSERIE DE VÉHICULE POUR VÉHICULE À SELLE

(30) Priority: 13.01.2017 JP 2017004590
(43) Date of publication of application: 18.07.2018
(73) Proprietor: HONDA MOTOR CO., LTD., Tokyo 107-8556 (JP)
(72) Inventor: SHIGIHARA, Takashi, Wako-shi, Saitama 351-0193 (JP)
(74) Representative: Piésold, Alexander James

(56) References cited:
- EP-A1- 2 682 672
- EP-A1- 3 002 184
- DE-A1-102007 013 309
- JP-A- 2008 105 665
- JP-A- 2013 131 316
- JP-A- 2013 151 178
- JP-A- 2013 151 179
- JP-A- 2013 178 874
- US-A1- 2015 369 443
- US-A1- 2016 288 855

## Description

The present invention relates to a vehicle body front portion structure for a saddled vehicle.

A known arrangement in a saddled vehicle includes a headlight disposed on a stay that connects a top bridge with a bottom bridge (see, for example, Japanese Patent Laid-Open No. 2005-119485).

Although the headlight disclosed in Japanese Patent Laid-Open No. 2005-119485 includes a bulb, the current trend is toward an increasing number of light-emitting diodes (LEDs) used for the headlight and the LED requires a heat sink.

Thus a need exists, in saddled vehicles having a limited mounting space available, for disposing the heat sink efficiently without allowing a vehicle body front portion to become large in size. EP2682672 discloses the preamble of claim 1.

An object of at least the preferred embodiments of the present invention is to provide a vehicle body front portion structure for a saddled vehicle, capable of disposing a heat sink efficiently.

An aspect of the present invention provides a vehicle body front portion structure for a saddled vehicle, comprising: a headlight unit that includes a heat sink for cooling light sources; wherein the headlight unit includes at least: the heat sink; light-emitting diodes as light sources disposed at rear portions of the heat sink; reflectors that reflect light emitted by the light-emitting diodes toward a front of the vehicle; and lenses disposed anterior to the reflectors to transmit the light emitted by the light-emitting diodes, characterised by a stay that connects a top bridge and a bottom bridge, the top bridge and the bottom bridge connecting left and right parts of a front fork, the headlight unit being disposed in the stay, wherein the heat sink is disposed between the top bridge and the bottom bridge at a frontmost position in the headlight unit so as to be subject to air being blown thereagainst during forward travel of the saddled vehicle; and wherein the reflectors and the lenses are disposed to surround the heat sink.

Preferably, the one pair of left and right stays is provided, and the heat sink is disposed between the left and right stays.

Preferably, low-beam light emitting portions are disposed on outsides in a vehicle width direction of the heat sink, the low-beam light emitting portions emitting low beams, and a high-beam light emitting portion is disposed inferior to the heat sink, the high-beam light emitting portion emitting a high beam.

Further preferably, each of the one pair of left and right stays includes a handlebar holder integrated with an upper end portion of the stays, the handlebar holder supporting a handlebar.

Preferably, the stays each have first through holes formed at an upper end portion thereof so as to vertically pass through the handlebar holder and a second through hole formed at a lower end portion thereof so as to pass therethrough in a fore-aft direction, and the stays each have the upper portion fastened to the top bridge using first fasteners inserted in the first through holes and have the lower portion fastened to the bottom bridge using a second fastener inserted in the second through hole.

Preferably, the top bridge, the heat sink, and the one pair of left and right stays enclose to form a space, and a flexible long element is passed into the space.

In accordance with the aspect of the present invention, the heat sink is disposed between the top bridge and the bottom bridge at the frontmost position in the headlight unit. Disposing the heat sink between the top bridge and the bottom bridge in a saddled vehicle having a limited mounting space available prevents the vehicle body front portion from becoming large in size and promotes improved cooling efficiency of the heat sink through air flow. The heat sink can thus be disposed efficiently.

In accordance with the aspect of the present invention, the headlight unit includes at least the heat sink, the LEDs as the light sources disposed at the rear portions of the heat sink, the reflectors that reflect light emitted by the LEDs toward the front of the vehicle, and the lenses disposed anterior to the reflectors to transmit the light emitted by the LEDs. Thus, the LEDs are not visible in a front elevational view to achieve improved appearance and the reflectors can emit light from the LEDs toward the front of the vehicle.

In embodiments in which the one pair of left and right stays is provided and the heat sink is disposed between the left and right stays, the heat sink can be disposed efficiently without the need to increase the size of the vehicle body front portion.

In accordance with the aspect of the present invention the reflectors and the lenses are disposed to surround the heat sink. Thus, the parts related to the headlight unit, including the heat sink, the reflectors, the lenses, and the LEDs, can be centrally disposed, so that centralization of mass and shortening of wires can be promoted.

In embodiments the low-beam light emitting portions that emit the low beams are disposed on the outside in the vehicle width direction of the heat sink and the high-beam light emitting portion that emits the high beam is disposed inferior to the heat sink. The low-beam light emitting portions and the high-beam light emitting portion can thus be centrally disposed around the heat sink, to thereby promote centralization of mass and shortening of wires.

In embodiments, the handlebar holders that support the handlebar are integrally disposed at the upper end portions of the one pair of left and right stays. Thus, the number of parts used can be reduced and cost can be reduced.

In embodiments the stays each have the first through holes formed at the upper end portion thereof so as to vertically pass through the handlebar holder and the second through hole formed at the lower end portion thereof so as to pass therethrough in the fore-aft direction, and the stays each have the upper portion fastened to the top bridge using the first fasteners inserted in the first through holes and have the lower portion fastened to the bottom bridge using the second fastener inserted in the second through hole. The upper portion and the lower portion of the stay can thus be rigidly supported by the top bridge and the bottom bridge.

In embodiments, the top bridge, the heat sink, and the one pair of left and right stays enclose to form a space, and the flexible long element is passed into the space. The space can thereby be effectively used.

FIG. 1 is a right side elevational view of a motorcycle including a vehicle body front portion structure according to an embodiment of the present invention.
FIG. 2 is a front elevational view depicting the motorcycle.
FIG. 3 is a front elevational view depicting a headlight unit and parts around the headlight unit.
FIG. 4 is a perspective view depicting the headlight unit and parts around the headlight unit.
FIG. 5 is a perspective view depicting a condition in which a top bridge, a bottom bridge, and left and right headlight stays are assembled with each other.
FIG. 6 is an exploded perspective view depicting the top bridge, the bottom bridge, and the left and right headlight stays.
FIG. 7 is a cross-sectional view taken along line VII-VII in FIG. 3.
FIG. 8 is a cross-sectional view taken along line VIII-VIII in FIG. 3.
FIG. 9 is a perspective view depicting a meter supported by left and right holders.
FIG. 10 is a right side elevational view depicting a structure for mounting the headlight stay onto a front fork.

A specific embodiment to which the present invention is applied will be described below by way of example and with reference to the accompanying drawings. Throughout the descriptions given hereunder, longitudinal, lateral, and vertical directions are relative to the vehicle body unless otherwise specified. In the drawings, an arrow FR denotes a vehicle forward direction, an arrow UP denotes a vehicle upward direction, and an arrow LH denotes a vehicle leftward direction individually.

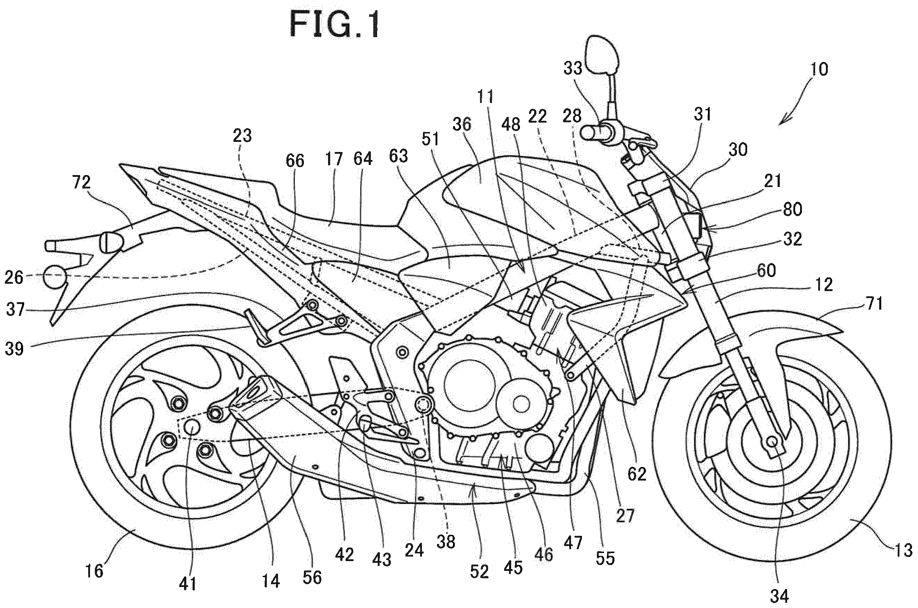

FIG. 1 is a right side elevational view of a motorcycle 10 including a vehicle body front portion structure according to an embodiment of the present invention.

The motorcycle 10 includes a vehicle body frame 11 that serves as a framework. A front wheel 13 is supported on the vehicle body frame 11 via a front fork 12. A rear wheel 16 is supported on the vehicle body frame 11 via a swing arm 14. A seat 17 is supported on an upper portion of the vehicle body frame 11.

The vehicle body frame 11 includes a head pipe 21, a pair of left and right main frames 22, a pair of left and right seat rails 23, a pair of left and right pivot frames 24, a pair of left and right sub-frames 26, and a pair of left and right down frames 27.

The front fork 12 is rotatably supported on the head pipe 21. The front fork 12 includes a top bridge 31 and a bottom bridge 32 that connect left and right parts of the front fork 12. One pair of left and right headlight stays 30 is disposed across the top bridge 31 and the bottom bridge 32.

A headlight unit 80 having an LED as a light source is mounted on the left and right headlight stays 30. A handlebar 33 is mounted at upper portions of the left and right headlight stays 30. The front wheel 13 is supported at a lower end portion of the front fork 12 via an axle 34.

The main frames 22 extend from the head pipe 21 downwardly toward the rear. A fuel tank 36 is supported at upper portions of the main frames 22. The seat rails 23 extend from rear portions of the main frames 22 upwardly toward the rear and support the seat 17. Step holders 37 are mounted on the seat rails 23 and passenger steps 39 are mounted on the step holders 37. The pivot frames 24 extend from rear ends of the main frames 22 toward downwardly. A pivot shaft 38 extending in a vehicle width direction is supported on the left and right pivot frames 24. The swing arm 14 is supported by the pivot shaft 38 vertically swingably. The swing arm 14 has a rear end portion supporting the rear wheel 16 via an axle 41. Step holders 42 are attached on lower portions of the respective left and right pivot frames 24. Rider steps 43 are mounted on the respective step holders 42.

The sub-frames 26 are connected with upper portions of the pivot frames 24 and rear end portions of the seat rails 23. The down frames 27 extend from reinforcement frames 28 disposed across the head pipe 21 and the main frames 22 downwardly toward the rear in a space inferior to the main frames 22.

An engine 45 is supported by the pivot frames 24 and the down frames 27.

The engine 45 includes a crankcase 46 and a cylinder portion 47 extending upwardly from a front portion of the crankcase 46. The cylinder portion 47 includes a cylinder head 48. An intake system 51 is connected with a rear portion of the cylinder head 48 and an exhaust system 52 is connected with a front portion of the cylinder head 48. The exhaust system 52 includes an exhaust pipe 55 connected with the cylinder head 48 and a muffler 56 connected with a rear end portion of the exhaust pipe 55.

The vehicle body frame 11 has an upper portion covered in a vehicle body cover 60.

The vehicle body cover 60 includes a pair of left and right radiator shrouds 62, a pair of left and right front side covers 63, a pair of left and right rear side covers 64, and a pair of left and right rear covers 66.

The radiator shrouds 62 laterally cover parts of the main frames 22 and the down frames 27 and a radiator (not depicted). The front side covers 63 laterally cover the main frames 22 and the seat rails 23. The rear side covers 64 and the rear covers 66 laterally cover the seat rails 23 and the sub-frames 26.

The front wheel 13 is covered in a front fender 71 from above and the rear wheel 16 is covered in a rear fender 72 from above.

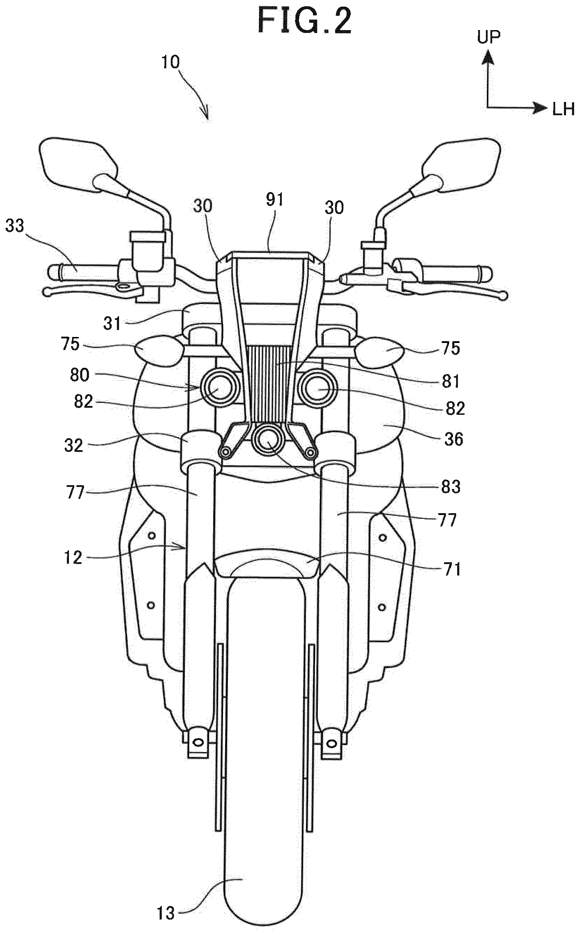

FIG. 2 is a front elevational view depicting the motorcycle 10.

The one pair of left and right headlight stays 30 is mounted on the top bridge 31 and the bottom bridge 32 of the front fork 12. The headlight unit 80 is supported by the left and right headlight stays 30.

The handlebar 33 is supported at the upper end portions of the left and right headlight stays 30. Left and right direction indicators 75 are disposed on lateral portions at vertically middle portions of the left and right headlight stays 30.

The headlight unit 80 includes a heat sink 81, a pair of left and right low-beam light emitting portions 82, and a high-beam light emitting portion 83. The heat sink 81 is disposed between the left and right headlight stays 30. The low-beam light emitting portions 82 are disposed outside in the vehicle width direction of the left and right headlight stays 30. The high-beam light emitting portion 83 is disposed inferior to the heat sink 81.

The heat sink 81 prompts the LED as the light source to dissipate heat. The low-beam light emitting portions 82 emit a low beam. The high-beam light emitting portion 83 emits a high beam.

In a front elevational view, the headlight unit 80 is disposed in a range inside in the vehicle width direction from a pair of left and right fork tubes 77 that constitute the front fork 12. The fork tubes 77 assume a shock absorber including a damper and a compression coil spring not depicted.

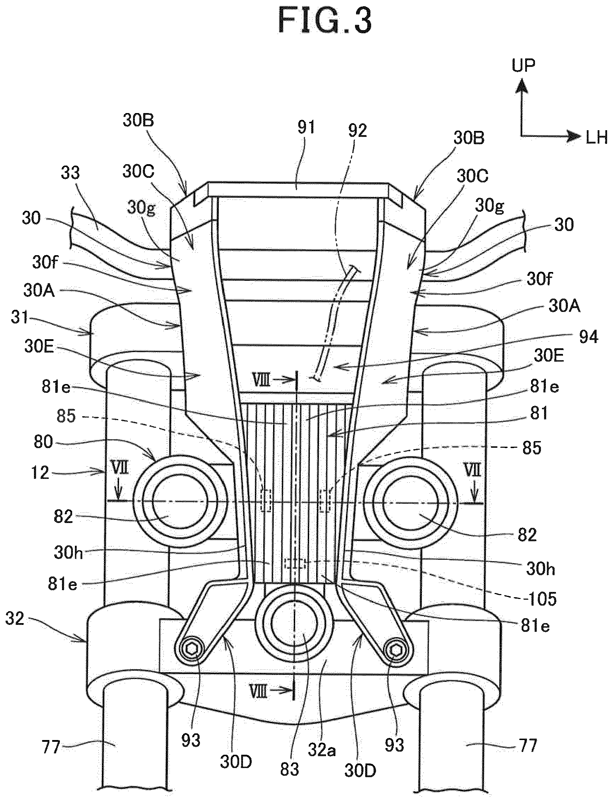

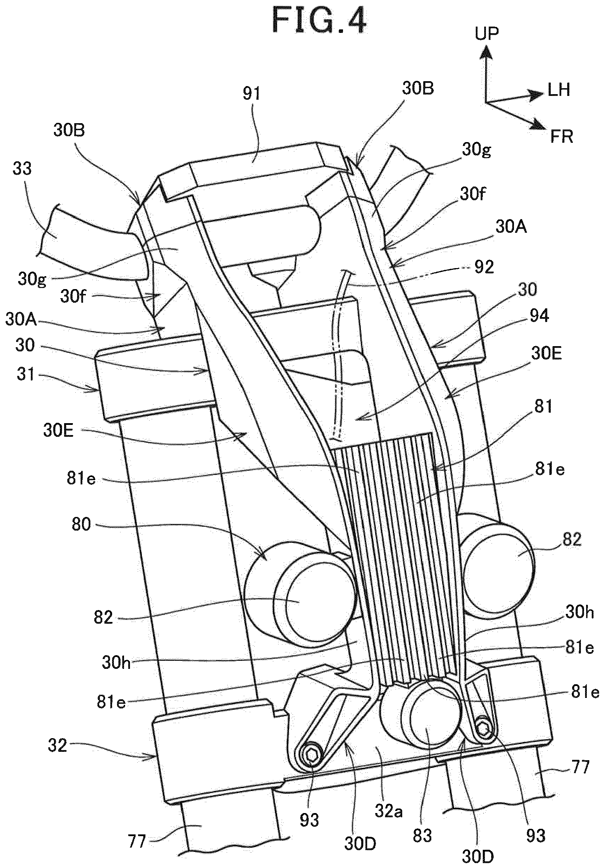

FIG. 3 is a front elevational view depicting the headlight unit 80 and parts around the headlight unit 80. FIG. 4 is a perspective view depicting the headlight unit 80 and parts around the headlight unit 80.

As depicted in FIGS. 3 and 4, the headlight stays 30 each include a stay main unit 30A and a holder 30B fastened to an upper end portion of the stay main unit 30A.

The stay main unit 30A includes an upper portion mounting portion 30C, a lower portion mounting portion 30D, and an intermediate portion support portion 30E that are integrated with each other.

The upper portion mounting portion 30C is mounted on the top bridge 31. The lower portion mounting portion 30D is mounted on the bottom bridge 32. The intermediate portion support portion 30E is disposed between the upper portion mounting portion 30C and the lower portion mounting portion 30D and supports the headlight unit 80.

A handlebar holder 30f on which the handlebar 33 is mounted is disposed in the upper portion mounting portion 30C. The handlebar holder 30f includes a stay-side holder 30g disposed at an upper portion of the upper portion mounting portion 30C and the holder 30B fastened to an upper portion of the stay-side holder 30g. The handlebar 33 is mounted in the handlebar holder 30f. More specifically, the handlebar 33 is clamped between the stay-side holder 30g and the holder 30B and fixed in place by the holder 30B being fastened with a plurality of bolts (not depicted) onto the stay-side holder 30g.

A meter 91 is mounted on an upper end portion of the holder 30B.

The lower portion mounting portion 30D is fastened to a front surface 32a of the bottom bridge 32 with a bolt 93. The high-beam light emitting portion 83 of the headlight unit 80 is disposed on the inside in the vehicle width direction of the lower portion mounting portion 30D.

The heat sink 81 of the headlight unit 80 is disposed on the inside in the vehicle width direction of the intermediate portion support portion 30E. The low-beam light emitting portion 82 is disposed on the outside in the vehicle width direction of the intermediate portion support portion 30E. The intermediate portion support portion 30E has a thin-wall portion 30h formed at a portion thereof at which the low-beam light emitting portion 82 is disposed. The thin-wall portion 30h has a narrower width in the vehicle width direction. This arrangement allows a distance between the left and right low-beam light emitting portions 82 to be reduced, so that the headlight unit 80 can be built slimmer and more compact.

Additionally, the intermediate portion support portion 30E is curved to protrude further forward than the upper portion mounting portion 30C and the lower portion mounting portion 30D. This arrangement gives a vehicle body front portion additional three-dimensional effect.

The top bridge 31, the heat sink 81, and the left and right stays 30 (specifically, the left and right intermediate portion support portions 30E) enclose to a space 94. A brake cable, a brake hose, and a wire harness extending from the handlebar 33, wire harnesses extending from other portions, and other flexible long elements 92 are passed into the space 94.

As described above, the one pair of left and right headlight stays 30 is provided and the heat sink 81 is disposed between the left and right headlight stays 30. This arrangement enables the heat sink 81 to be disposed efficiently without the need to increase the size of the vehicle body front portion.

The low-beam light emitting portions 82 that emit low beams are disposed on the outside in the vehicle width direction of the heat sink 81 and the high-beam light emitting portion 83 that emits a high beam is disposed inferior to the heat sink 81. The foregoing arrangement allows the low-beam light emitting portions 82 and the high-beam light emitting portion 83 to be centrally disposed around the heat sink 81, to thereby promote centralization of mass and shortening of wires.

Additionally, the handlebar holders 30f (specifically, the stay-side holders 30g) that support the handlebar 33 as a handlebar of the motorcycle are integrally disposed at the upper end portions of the one pair of left and right headlight stays 30 (specifically, the stay main units 30A). This arrangement can reduce the number of parts used and thus can reduce cost.

Additionally, the top bridge 31, the heat sink 81, and the left and right headlight stays 30 enclose to form the space 94. The flexible long elements 92 including the brake cable, the brake hose, a clutch cable, and the wire harness are passed into the space 94. The foregoing arrangement enables effective use of the space 94.

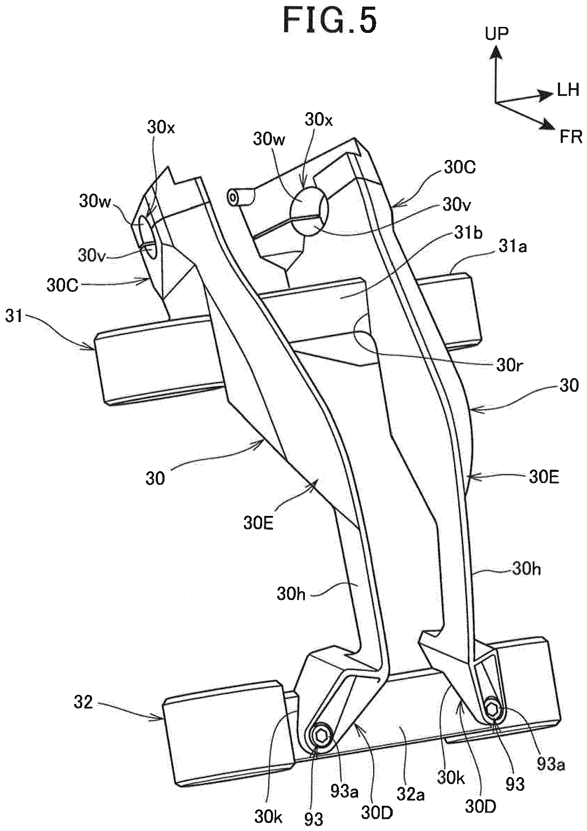

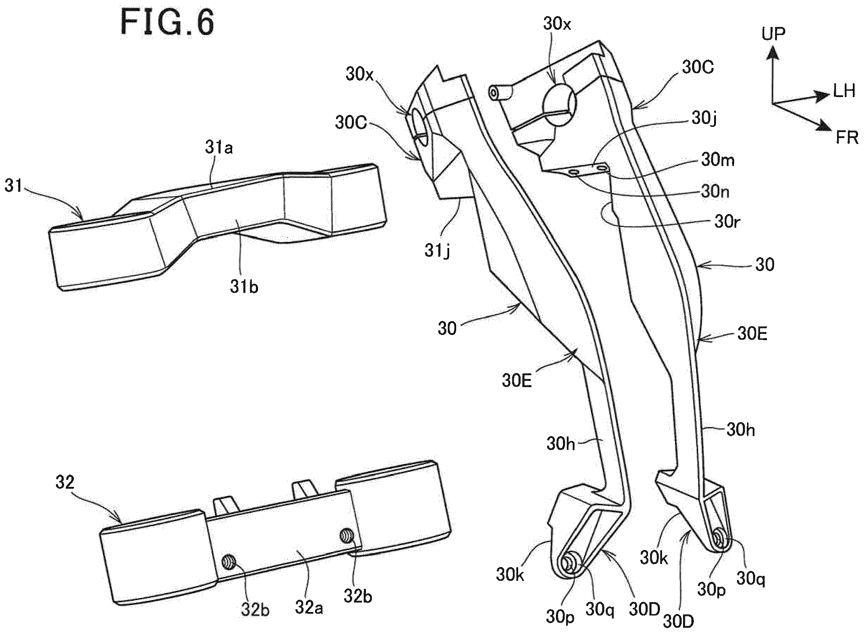

FIG. 5 is a perspective view depicting a condition in which the top bridge 31, the bottom bridge 32, and the left and right headlight stays 30 are assembled with each other. FIG. 6 is an exploded perspective view depicting the top bridge 31, the bottom bridge 32, and the left and right headlight stays 30.

As depicted in FIGS. 5 and 6, the upper portion mounting portion 30C of the headlight stay 30 has a shoulder 30j formed at a lower end thereof. The shoulder 30j abuts on an upper surface 31a of the top bridge 31. The shoulder 30j has a pair of front and rear upper portion through holes 30m and 30n that vertically pass through the upper portion mounting portion 30C. Bolts (not depicted) are passed through the upper portion through holes 30m and 30n to thereby fasten the headlight stay 30 to the top bridge 31.

The upper portion mounting portion 30C has a cutout 30v having a semi-circular cross section formed in an upper end thereof. The holder 30B has a cutout 30w having a semi-circular cross section formed in lower end thereof. The cutout 30v is mated with the cutout 30w and a circular handlebar pass-through hole 30x extending in the vehicle width direction is formed. The handlebar 33 is passed through the handlebar pass-through holes 30x.

The lower portion mounting portion 30D has a rear surface 30k formed at a lower end portion thereof. The rear surface 30k abuts on the front surface 32a of the bottom bridge 32. The lower portion mounting portion 30D has a lower portion through hole 30p formed to pass from a front side of the lower portion mounting portion 30D through the rear surface 30k in a fore-aft direction. The bolt 93 that fastens the headlight stay 30 to the bottom bridge 32 is passed through the lower portion through hole 30p. The lower portion through hole 30p has a large-diameter hole 30q formed at a front end portion thereof. A head 93a of the bolt 93 is inserted in the large-diameter hole 30q.

The front surface 32a of the bottom bridge 32 has threaded holes 32b formed therein. The bolts 93 are threadedly engaged in the threaded holes 32b.

The intermediate portion support portion 30E has a rear surface 30r formed at an upper end portion thereof. The rear surface 30r abuts on or is brought close to a front surface 31b of the top bridge 31.

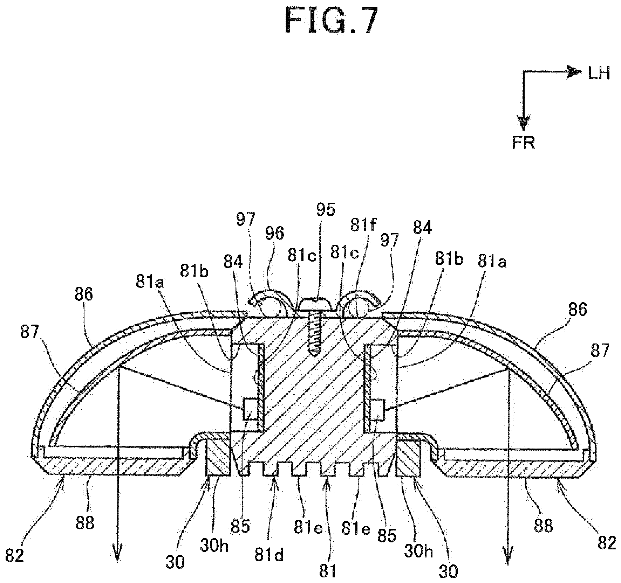

FIG. 7 is a cross-sectional view taken along line VII-VII in FIG. 3.

The low-beam light emitting portions 82 of the headlight unit 80 each include a substrate 84, a low-beam LED 85, a housing 86, a reflector 87, and a lens 88.

The heat sink 81 has left and right lateral surfaces 81a. The lateral surfaces 81a each has a recess 81b formed therein. The substrate 84 is mounted on a bottom surface 81c of the recess 81b. The low-beam LED 85 is mounted on the substrate 84. A front surface 81d of the heat sink 81 has a plurality of cooling fins 81e. The cooling fins 81e on the front surface 81d of the heat sink 81 cause air to be actively blown thereagainst to thereby enhance cooling performance of the heat sink 81, so that the low-beam LEDs 85 can be further cooled.

The left and right lateral surfaces 81a of the heat sink 81 are each provided with the housing 86. The reflector 87 that reflects light emitted from the low-beam LED 85 toward the front of the vehicle is disposed inside the housing 86. The lens 88 that transmits and refracts light reflected by the reflector 87 is mounted at the front end portion of the housing 86. The arrow in FIG. 7 indicates the direction in which light emitted by the low-beam LED 85 travels.

A harness holder 96 is fixed by a screw 95 onto a back surface 81f of the heat sink 81. Wire harnesses 97 connected with the respective substrates 84 are held in place by the harness holder 96. The wire harnesses 97 are included in the long elements 92 (see FIG. 3) described previously.

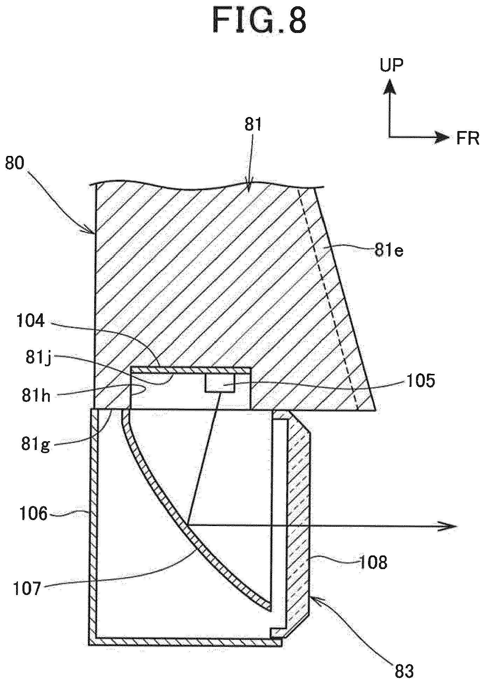

FIG. 8 is a cross-sectional view taken along line VIII-VIII in FIG. 3.

The high-beam light emitting portion 83 of the headlight unit 80 includes a substrate 104, a high-beam LED 105, a housing 106, a reflector 107, and a lens 108.

The heat sink 81 has a lower surface 81g. The lower surface 81g has a recess 81h formed therein. The substrate 104 is mounted on a bottom surface 81j of the recess 81h. The high-beam LED 105 is mounted on the substrate 104. The lower surface 81g of the heat sink 81 is provided with the housing 106. The reflector 107 that reflects light emitted from the high-beam LED 105 toward the front of the vehicle is disposed inside the housing 106. The lens 108 that transmits and refracts light reflected by the reflector 107 is mounted at the front end portion of the housing 106. The arrow in FIG. 8 indicates the direction in which light emitted by the high-beam LED 105 travels.

As depicted in FIGS. 7 and 8, the headlight unit 80 includes at least the heat sink 81, the low-beam LEDs 85, the high-beam LED 105, the reflectors 87 and 107, and the lenses 88 and 108.

The low-beam LEDs 85 and the high-beam LED 105 are light sources disposed in rear portions of the heat sink 81. The reflectors 87 and 107 reflect light emitted from the low-beam LEDs 85 and the high-beam LED 105 individually toward the front of the vehicle. The lenses 88 and 108 are individually disposed anterior to the reflectors 87 and 107, and individually transmit the light from the low-beam LEDs 85 and the high-beam LED 105.

The foregoing arrangement results in the low-beam LEDs 85 and the high-beam LED 105 not being visible in a front elevational view, thus improving appearance and enabling the reflectors 87 and 107 to emit light from the low-beam LEDs 85 and the high-beam LED 105 toward the front of the vehicle.

Additionally, the reflectors 87 and 107 and the lenses 88 and 108 are disposed to surround the heat sink 81. This arrangement allows the parts related to the headlight unit 80, including the heat sink 81, the reflectors 87 and 107, the lenses 88 and 108, and the low-beam LEDs 85 and the high-beam LED 105, to be centrally disposed, so that centralization of mass and shortening of wires can be promoted.

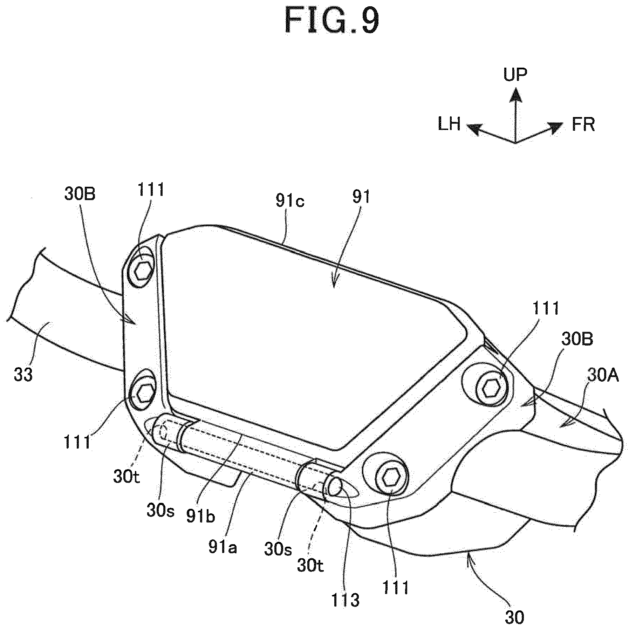

FIG. 9 is a perspective view depicting the meter 91 supported by the left and right holders 30B.

The left and right holders 30B are fastened to the upper end portions of the stay main units 30A (only the stay main unit 30A on one side is illustrated) of the headlight stays 30 by a plurality of bolts 111.

The left and right holders 30B each include a shaft support 30s formed at a rear end portion thereof. The shaft support 30s has a shaft insertion hole 30t. An oscillation shaft 113 is press-fitted into the left and right shaft insertion holes 30t and the meter 91 (specifically, a rear end portion 91a of the meter 91) is oscillatably supported by the oscillation shaft 113.

The meter 91 is formed into a trapezoid having a second side (bottom base) 91c disposed at the front of the vehicle with respect to a first side (upper base) 91b that is opposed to the second side 91c, such that the meter 91 fits into a space between the left and right holders 30B.

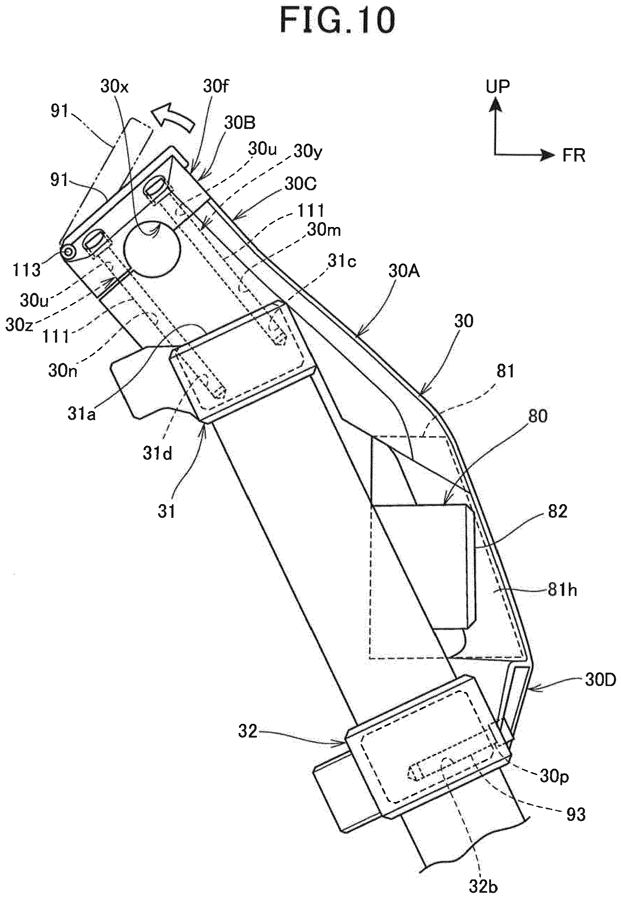

FIG. 10 is a right side elevational view depicting a structure for mounting the headlight stay 30 onto the front fork 12.

The upper portion mounting portion 30C of the headlight stay 30 has the upper portion through holes 30m and 30n and the holder 30B has holder through holes 30u.

The upper portion through hole 30m and the holder through hole 30u constitute a first through hole 30y. The upper portion through hole 30n and the holder through hole 30u constitute a first through hole 30z. The bolt 111 is passed through each of the first through holes 30y and 30z. The bolts 111 have leading end portions threadedly engaged with threaded holes 31c and 31d formed in the upper surface 31a of the top bridge 31.

The lower portion mounting portion 30D of the stay main unit 30A has the lower portion through hole 30p. The bolt 93 is inserted in the lower portion through hole 30p and the leading end portion of the bolt 93 is threaded engaged with the threaded hole 32b in the bottom bridge 32. The left and right headlight stays 30 are thereby fastened to the top bridge 31 and the bottom bridge 32 and the handlebar 33 (see FIG. 4) is fixed to the left and right headlight stays 30.

The meter 91 is angularly adjustable by being oscillated from the condition housed between the left and right holders 30B about the oscillation shaft 113 to the position indicated by the dash-double-dot line as indicated by the outlined arrow in FIG. 10.

The meter 91 is oscillatably supported on the oscillation shaft 113 via a friction generation mechanism (not depicted). The friction generation mechanism generates friction of predetermined magnitude between the oscillation shaft 113 and a bearing portion of the meter 91 and is thus capable of holding the meter 91 at any given angular position.

As depicted in FIGS. 3 and 10, in the motorcycle 10 as a saddled vehicle, the headlight unit 80 includes the low-beam LEDs 85 and the high-beam LED 105 as the LED light sources and the heat sink 81 that cools the low-beam LEDs 85 and the high-beam LED 105. The headlight unit 80 is disposed on the one pair of left and right headlight stays 30 that serve as a stay for connecting the top bridge 31 with the bottom bridge 32 that connect the left and right parts of the front fork 12.

The heat sink 81 is disposed between the top bridge 31 and the bottom bridge 32 and positioned at a frontmost part of the headlight unit 80.

The foregoing arrangement results in the vehicle body front portion not being large in size in the motorcycle 10 having a limited mounting space available (see FIG. 1) because of the heat sink 81 being disposed between the top bridge 31 and the bottom bridge 32. The arrangement also promotes improved cooling efficiency of the heat sink 81 using the air flow.

Additionally, the arrangement in which the heat sink 81 is disposed between the top bridge 31 and the bottom bridge 32 reduces the amount of protrusion of the heat sink 81 from the front fork 12, so that a steering force required for steering the handlebar can be reduced.

As depicted in FIG. 10, the headlight stay 30 has the first through holes 30y and 30z formed at the upper end portion thereof so as to vertically pass through the handlebar holder 30f and the lower portion through hole 30p as a second through hole formed at the lower end portion thereof so as to pass therethrough in the fore-aft direction. The headlight stay 30 has the upper portion fastened to the top bridge 31 using the bolts 111 as first fasteners inserted in the first through holes 30y and 30z and has the lower portion fastened to the bottom bridge 32 using the bolt 93 as a second fastener inserted in the lower portion through hole 30p.

The foregoing arrangement enables the upper portion and the lower portion of the headlight stay 30 to be rigidly supported by the top bridge 31 and the bottom bridge 32.

While the present invention has been particularly described with reference to a specific illustrative embodiment, it will be understood that the present invention may be embodied in other specific forms without departing from the spirit or essential characteristics thereof.

For example, as depicted in FIG. 10, the holder 30B on the upper side and the stay main unit 30A on the lower side are jointly fastened to the top bridge 31 using the plural bolts 111. This arrangement is illustrative only and another possible approach is that the holder 30B on the upper side is fastened to the stay main unit 30A on the lower side and, separately from the foregoing fastening, the stay main unit 30A on the lower side is fastened to the top bridge 31.

While the embodiment of the present invention has been described as applied to the motorcycle 10, the invention is applicable to not only the motorcycle 10, but also other types of saddled vehicles. It is noted that the saddled vehicle includes general types of vehicles that include vehicle bodies straddled by the operator.

### [Description of Reference Symbols]

10 Motorcycle (saddled vehicle)
12 Front fork
30 Headlight stay
30f Handlebar holder
30m, 30n Upper portion through hole (first through hole)
30p Lower portion through hole (second through hole)
31 Top bridge
32 Bottom bridge
33 Handlebar (handlebar of motorcycle)
80 Headlight unit
81 Heat sink
82 Low-beam light emitting portion
83 High-beam light emitting portion
85 Low-beam LED (light source, LED)
87, 107 Reflector
88, 108 Lens
92 Long element
93 Bolt (second fastener)
94 Space
105 High-beam LED (light source, LED)
111 Bolt (first fastener)

## Claims

1. A vehicle body front portion structure for a saddled vehicle, comprising:
a headlight unit (80) that includes a heat sink (81) for cooling light sources (85, 105);
wherein the headlight unit (80) includes at least:
the heat sink (81);
light-emitting diodes (85, 105) as light sources disposed at rear portions of the heat sink (81);
reflectors (87, 107) that reflect light emitted by the light-emitting diodes (85, 105) toward a front of the vehicle; and
lenses (88, 108) disposed anterior to the reflectors (87, 107) to transmit the light emitted by the light-emitting diodes (85, 105), **characterised by**
a stay (30) that connects a top bridge (31) and a bottom bridge (32), the top bridge (31) and the bottom bridge (32) connecting left and right parts of a front fork (12), the headlight unit (80) being disposed in the stay (30), wherein
the heat sink (81) is disposed between the top bridge (31) and the bottom bridge (32) at a frontmost position in the headlight unit (80) so as to be subject to air being blown thereagainst during forward travel of the saddled vehicle; and
wherein the reflectors (87, 107) and the lenses (88, 108) are disposed to surround the heat sink (81).

2. A vehicle body front portion structure for a saddled vehicle according to claim 1, wherein
the one pair of left and right stays (30) is provided, and
the heat sink (81) is disposed between the left and right stays (30).

3. A vehicle body front portion structure for a saddled vehicle according to claims 1 or 2, wherein
low-beam light emitting portions (82) are disposed on outsides in a vehicle width direction of the heat sink (81), the low-beam light emitting portions (82) emitting low beams, and a high-beam light emitting portion (83) is disposed inferior to the heat sink (81), the high-beam light emitting portion (83) emitting a high beam.

4. A vehicle body front portion structure for a saddled vehicle according to any one of claims 1 to 3, wherein
each of the one pair of left and right stays (30) includes a handlebar holder (30f) integrated with an upper end portion of the stays (30), the handlebar holder (30f) supporting a handlebar (33).

5. A vehicle body front portion structure for a saddled vehicle according to claims 1 to 4, wherein
the stays (30) each have first through holes (30y, 30z) formed at an upper end portion thereof so as to vertically pass through the handlebar holder (30f) and a second through hole (30p) formed at a lower end portion thereof so as to pass therethrough in a fore-aft direction, and
the stays (30) each have the upper portion fastened to the top bridge (31) using first fasteners (111) inserted in the first through holes (30y, 30z) and have the lower portion fastened to the bottom bridge (32) using a second fastener (93) inserted in the second through hole (30p).

6. A vehicle body front portion structure for a saddled vehicle according to any one of claims 1 to 5, wherein
the top bridge (31), the heat sink (81), and the one pair of left and right stays (30) enclose to form a space (94), and
a flexible long element (92) is passed into the space (94).

## Patentansprüche

1. Vorderbereichsstruktur einer Fahrzeugkarosserie für ein Sattelfahrzeug, umfassend:
eine Frontlichteinheit (80), die ein Kühlblech (81) zum Kühlen von Lichtquellen (85, 105) enthält;
wobei die Frontlichteinheit (80) mindestens enthält:
das Kühlblech (81);
lichtemittierende Dioden (85, 105) als Lichtquellen, die an hinteren Bereichen des Kühlblechs (81) angeordnet sind;
Reflektoren (87, 107), die Licht, das von den lichtemittierenden Dioden (85, 105) emittiert wird, hin zu einer Vorderseite des Fahrzeugs reflektieren; und
Linsen (88, 108), die vor den Reflektoren (87, 107) angeordnet sind, um das Licht, das von den lichtemittierenden Dioden (85, 105) emittiert wird, durchzulassen, **gekennzeichnet durch**
einen Halter (30), der eine obere Brücke (31) und eine untere Brücke (32) verbindet, wobei die obere Brücke (31) und die untere Brücke (32) linke und rechte Bereiche einer Vordergabel (12) verbinden, wobei die Frontlichteinheit (80) in dem Halter (30) angeordnet ist, wobei
das Kühlblech (81) zwischen der oberen Brücke (31) und der unteren Brücke (32) bei einer vordersten Position in der Frontlichteinheit (80) angeordnet ist, um Luft ausgesetzt zu sein, die während Vorwärtsbewegung des Sattelfahrzeugs dagegen geblasen wird; und
wobei die Reflektoren (87, 107) und die Linsen (88, 108) angeordnet sind, das Kühlblech (81) zu umgeben.

2. Vorderbereichsstruktur einer Fahrzeugkarosserie für ein Sattelfahrzeug nach Anspruch 1, wobei
das eine Paar von linken und rechten Haltern (30) bereitgestellt ist, und
das Kühlblech (81) zwischen den linken und rechten Haltern (30) angeordnet ist.

3. Vorderbereichsstruktur einer Fahrzeugkarosserie für ein Sattelfahrzeug nach Anspruch 1 oder 2, wobei
Abblendlicht-emittierende Bereiche (82) an Außenseiten in einer Fahrzeugbreitenrichtung des Kühlblechs (81) angeordnet sind, die Abblendlichtemittierenden Bereiche (82) Abblendlicht emittieren und ein Fernlicht-emittierender Bereich (83) hinter dem Kühlblech (81) angeordnet ist, wobei der Fernlicht-emittierende Bereich (83) ein Fernlicht emittiert.

4. Vorderbereichsstruktur einer Fahrzeugkarosserie für ein Sattelfahrzeug nach einem der Ansprüche 1 bis 3, wobei
jede des einen Paares von linken und rechten Haltern (30) eine Lenkstangenhalterung (30f) enthält, die in einem oberen Endbereich der Halter (30) integriert sind, wobei die Lenkstangenhalterung (30f) eine Lenkstange (33) stützt.

5. Vorderbereichsstruktur einer Fahrzeugkarosserie für ein Sattelfahrzeug nach den Ansprüchen 1 bis 4, wobei
die Halter (30) jeweils erste Durchlasslöcher (30y, 30z), die an einem oberen Endbereich davon gebildet sind, um die Lenkstangenhalterung (30f) vertikal durchzulassen, und ein zweites Durchlassloch (30p), das an einem unteren Endbereich davon gebildet ist, um in einer Längsrichtung dadurch zu gehen, haben, und
die Halter (30) jeweils den oberen Bereich an die obere Brücke (31) befestigt aufweisen, unter Verwendung erster Befestigungsmittel (111), die in die ersten Durchlasslöcher (30y, 30z) eingefügt werden, und den unteren Bereich an die untere Brücke (32) befestigt aufweisen, unter Verwendung eines zweiten Befestigungsmittels (93), das in das zweite Durchlassloch (30p) eingefügt wird.

6. Vorderbereichsstruktur einer Fahrzeugkarosserie für ein Sattelfahrzeug nach einem der Ansprüche 1 bis 5, wobei
die obere Brücke (31), das Kühlblech (81) und das eine Paar linker und rechter Halter (30) sich anfügen, um einen Raum (94) zu bilden; und
ein flexibles langes Element (92) in den Raum (94) durchgelassen wird.

## Revendications

1. Structure de partie avant d'une carrosserie de véhicule pour un véhicule à selle, comprenant :
une unité de phare (80) qui inclut un puits thermique (81) pour refroidir les sources lumineuses (85, 105) ;
dans laquelle l'unité de phare (80) inclut au moins :
le puits thermique (81) ;
les diodes électroluminescentes (85, 105) en tant que sources de lumière placées au niveau des parties arrière du puits thermique (81) ;
les réflecteurs (87, 107) qui réfléchissent la lumière émise par les diodes électroluminescentes (85, 105) vers l'avant du véhicule ; et
les lentilles (88, 108) placées antérieurement aux réflecteurs (87, 107) pour transmettre la lumière émise par les diodes électroluminescentes (85, 105), **caractérisés par**
un montant (30) qui relie un pont supérieur (31) et un pont inférieur (32), le pont supérieur (31) et le pont inférieur (32) reliant les parties gauche et droite d'une fourche avant (12), l'unité de phare (80) étant placée dans le montant (30), dans lequel
le puits thermique (81) est placé entre le pont supérieur (31) et le pont inférieur (32) dans une position complètement en avant dans l'unité de phare (80) de façon à être exposé à l'air soufflé contre celui-ci durant l'avance du véhicule à selle ; et
dans laquelle les réflecteurs (87, 107) et les lentilles (88, 108) sont placés pour entourer le puits thermique (81).

2. Structure de partie avant d'une carrosserie de véhicule pour un véhicule à selle selon la revendication 1, dans laquelle
la paire de montants gauche et droit (30) est fournie, et
le puits thermique (81) est placé entre les montants gauche et droit (30).

3. Structure de partie avant d'une carrosserie de véhicule pour un véhicule à selle selon les revendications 1 ou 2, dans laquelle
les parties émettant les feux de croisement (82) sont placées sur les extérieurs dans la direction de largeur d'un véhicule du puits thermique (81), les parties émettant les feux de croisement (82) émettant des faisceaux de croisement, et une partie émettant les feux de route (83) est placée sous le puits thermique (81), la partie émettant les feux de route (83) émettant un faisceau de route.

4. Structure de partie avant d'une carrosserie de véhicule pour un véhicule à selle selon l'une quelconque des revendications 1 à 3, dans laquelle
chacune des paires de montants gauche et droit (30) inclut un support de guidon (30f) intégré avec une partie d'extrémité supérieure des montants (30), le support de guidon (30f) supportant un guidon (33).

5. Structure de partie avant d'une carrosserie de véhicule pour un véhicule à selle selon les revendications 1 à 4, dans laquelle
les montants (30) ont chacun des premiers trous traversants (30y, 30z) formés à une partie d'extrémité supérieure de ceux-ci de façon à passer verticalement à travers le support de guidon (30f) et un second trou traversant (30p) formé à une partie d'extrémité inférieure de celui-ci de façon à passer à travers dans une direction avant-arrière, et
les montants (30) ont chacun la partie supérieure fixée au pont supérieur (31) utilisant les premiers éléments de fixation (111) insérés dans les premiers trous traversants (30y, 30z) et ont la partie inférieure fixée au pont inférieur (32) utilisant un second élément de fixation (93) inséré dans le second trou traversant (30p).

6. Structure de partie avant d'une carrosserie de véhicule pour un véhicule à selle selon l'une quelconque des revendications 1 à 5, dans laquelle
le pont supérieur (31), le puits thermique (81), et la paire de montants gauche et droit (30) sont entourés de façon à former un espace (94), et
un élément long flexible (92) est passé dans l'espace (94).
